(19) **Europäisches Patentamt**

**European Patent Office**

**Office européen des brevets**

(11) **EP 0 875 830 B1**

(12) **FASCICULE DE BREVET EUROPEEN**

(45) Date de publication et mention
de la délivrance du brevet:
**05.03.2003 Bulletin 2003/10**

(51) Int Cl.⁷: **G06F 11/00**

(21) Numéro de dépôt: **98410043.8**

(22) Date de dépôt: **28.04.1998**

(54) **Circuit testable à faible nombre de broches**

Prüfbare Schaltung mit geringer Zahl von Anschlüssen

Testable circuit with reduced pin count

(84) Etats contractants désignés:
**DE FR GB IT**

(30) Priorité: **29.04.1997 FR 9705592**

(43) Date de publication de la demande:
**04.11.1998 Bulletin 1998/45**

(73) Titulaire: **STMicroelectronics S.A.**
**92120 Montrouge (FR)**

(72) Inventeur: **Prunier, Jacques**
**38360 Sassenage (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 636 976     US-A- 5 561 761**

## Description

La présente invention concerne les dispositifs électroniques ayant un faible nombre de broches à fonctions prédéfinies, et notamment les dispositifs électroniques portables de type "SMARTCARD". La présente invention concerne plus spécifiquement le test de tels dispositifs électroniques.

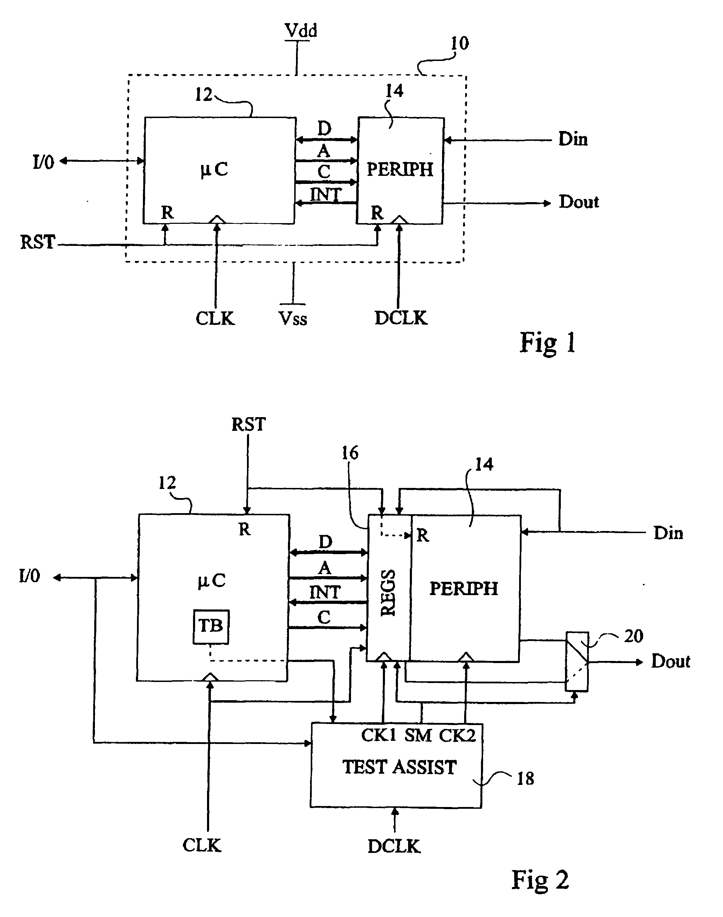

La figure 1 représente schématiquement la structure interne d'un dispositif électronique 10 de type "SMARTCARD". Le dispositif comprend un microcontrôleur 12, ou noyau, couplé à un périphérique 14 par un bus classique comportant des lignes de données D, d'adresse A, et de commande C. Par ailleurs, le microcontrôleur 12 reçoit des interruptions INT du périphérique 14.

Le dispositif comporte seulement huit broches de fonctions bien précises. Deux broches, Vdd et Vss, servent à l'alimentation du dispositif. Une broche d'entrée/sortie I/O constitue la seule voie d'accès au microcontrôleur 12. Le périphérique 14 est connecté à une broche d'entrée de données Din et à une broche de sortie de données Dout. Le microcontrôleur est cadencé par l'intermédiaire d'une broche d'horloge CLK tandis que le périphérique 14 est cadencé indépendamment par l'intermédiaire d'une broche d'horloge DCLK. Une broche de remise à zéro générale RST sert à mettre à zéro tous les éléments du dispositif 10.

Les dispositifs du type de la figure 1 sont souvent utilisés pour le décryptage de données. Dans ce cas, les données chiffrées arrivent sur la broche Din, subissent un traitement dans le périphérique 14 déterminé par le microcontrôleur 12, et sortent décryptées par la broche Dout. Les données sont traitées de manière asynchrone par rapport au fonctionnement du microcontrôleur, d'où l'utilisation de deux horloges CLK et DCLK. La clé servant au décryptage, qui détermine donc les traitements à effectuer par le périphérique 14, est stockée de manière inaccessible dans le microcontrôleur 12. Ainsi, pour des raisons de sécurité, les possibilités d'action sur le microcontrôleur 12 par l'intermédiaire de la broche I/O sont limitées.

La broche I/O permet notamment de mettre le microcontrôleur 12 dans un mode de test pour réaliser un test exhaustif du microcontrôleur. La broche I/O est alors par défaut dans le mode entrée.

Les diverses actions autorisées de l'extérieur sur le microcontrôleur 12 s'obtiennent en échangeant des informations par la broche I/O selon un protocole prédéfini.

Un inconvénient d'un tel dispositif est que ses possibilités, notamment de test, sont particulièrement limitées du fait du faible nombre de broches ayant toutes des fonctions attribuées et du fait que les possibilités d'accès au dispositif par l'intermédiaire de la broche I/O sont limitées pour des raisons de sécurité.

Par ailleurs, le microcontrôleur 12 étant programmé pour interpréter le protocole, effectuer les actions demandées, et retourner les résultats par l'intermédiaire de la broche I/O, les actions doivent rester simples pour ne pas augmenter la capacité mémoire du microcontrôleur et donc la taille du dispositif. La programmation ne permet plus de faire évoluer le protocole.

Enfin, ce dispositif est mal adapté au test de périphériques complexes, les tests effectués, très variés, étant peu codifiables par un protocole. Les informations à renvoyer au microcontrôleur par les lignes de données D ou d'interruption INT ne peuvent être établies qu'après exécution de séquences complexes difficilement intégrables au protocole.

Un objet de la présente invention, telle que définie par les revendications, est de rendre testable de l'extérieur un grand nombre d'éléments d'un dispositif du type susmentionné.

Cet objet est atteint grâce à un dispositif électronique comprenant un microcontrôleur pouvant être mis dans un mode spécifique dans lequel des registres internes sont modifiables de l'extérieur ; un périphérique couplé de manière interne au microcontrôleur par l'intermédiaire de registres d'interface ; une seule broche d'entrée/sortie pour communiquer avec le microcontrôleur de l'extérieur ; une broche d'entrée de périphérique et une broche de sortie de périphérique ; une broche d'horloge de microcontrôleur et une broche d'horloge de périphérique. Les registres d'interface sont susceptibles d'être connectés selon une configuration de registre à décalage formant un chemin d'exploration de test accessible en série et cadencé par un signal d'horloge à appliquer sur la broche d'horloge de périphérique. Un circuit d'assistance de test, dans un mode d'exploration, connecte les registres d'interface selon la configuration de registre à décalage, le mode d'exploration étant sélectionné lorsqu'un bit de test, accessible par la broche d'entrée/sortie, est validé et que la broche d'entrée/sortie est forcée de l'extérieur à un état distinct de son état par défaut.

Selon un mode de réalisation de la présente invention, le dispositif comprend en outre une broche de remise à zéro générale reliée directement à une entrée de remise à zéro du microcontrôleur. Cette broche de remise à zéro générale est reliée à une entrée de remise à zéro du périphérique par l'intermédiaire d'une bascule connectée dans le chemin d'exploration.

Selon un mode de réalisation de la présente invention, le contenu de ladite bascule est modifiable par le microcontrôleur.

Selon un mode de réalisation de la présente invention, le périphérique comprend une mémoire à laquelle le microcontrôleur accède en lecture par un bus interne. Une bascule est connectée dans le chemin d'exploration, dont un état actif provoque une lecture de ladite mémoire, un registre de capture, également connecté dans le chemin d'exploration, étant prévu pour stocker le mot présenté en sortie de la mémoire.

Selon un mode de réalisation de la présente invention, le dispositif comprend des moyens pour empêcher l'activation de la remise à zéro du périphérique par un état de ladite bascule lorsque le mode d'exploration est sélectionné.

La présente invention prévoit également un procédé de test d'un dispositif du type susmentionné, comprenant les étapes consistant à valider le bit de test par l'intermédiaire de la broche d'entrée/sortie ; à arrêter l'horloge du microcontrôleur ; à forcer la broche d'entrée/sortie à l'état opposé de son état par défaut ; et à introduire ou extraire des données en série à la cadence de l'horloge de périphérique dans le chemin d'exploration par la broche d'entrée ou par la broche de sortie du périphérique.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente schématiquement un dispositif de type "SMARTCARD" classique ;

la figure 2 représente schématiquement un dispositif du type de la figure 1 modifié selon la présente invention pour permettre un test efficace ;

la figure 3 représente des bascules de registres d'interface entre le microcontrôleur et le périphérique qui sont, selon la présente invention, susceptibles d'être connectés selon une configuration de registre à décalage pour former un chemin d'exploration ;

la figure 4 représente une bascule supplémentaire à insérer dans le chemin d'exploration afin de permettre le test de la fonctionnalité de remise à zéro générale ;

la figure 5 représente une bascule et un registre insérés dans le chemin d'exploration dans le but de capturer, pendant une phase de test, le contenu d'une mémoire du périphérique ; et

les figures 6A et 6B représentent des chronogrammes illustrant le fonctionnement normal et en phase d'exploration du circuit de la figure 5.

A la figure 2, dans un dispositif de type "SMARTCARD" selon l'invention, divers registres 16 se trouvant classiquement au niveau de l'interface entre le périphérique 14 et le microcontrôleur 12 sont susceptibles d'être connectés selon une configuration de registre à décalage pour former un chemin d'exploration ou "scan-path". Ces registres d'interface sont des registres accessibles en écriture par le microcontrôleur 12 par les lignes de données D, d'adresses A, et de commande C. Par ailleurs, le périphérique 14 comprend généralement un registre d'état à partir duquel des interruptions sont transmises au microcontrôleur 12. Ce registre d'état est donc également mis dans le chemin d'exploration.

Le fait de former un chemin d'exploration à partir des registres qui se trouvent au niveau des entrées et sorties d'un circuit est une technique classique pour rendre le circuit testable. Pour utiliser cette technique, on a normalement besoin d'au moins quatre broches supplémentaires sur le circuit, une première servant à rentrer en série des données de test dans le chemin d'exploration, une deuxième servant à extraire les données du chemin d'exploration, une troisième servant à fournir une horloge de test pour cadenoer la circulation des données dans le chemin d'exploration, et la quatrième servant à mettre le circuit dans un mode d'exploration dans lequel la connexion des registres est modifiée de sorte qu'ils constituent un registre à décalage pour former le chemin d'exploration.

Un dispositif de type "SMARTCARD" ne dispose toutefois d'aucune broche supplémentaire permettant d'exploiter un chemin d'exploration classique. Un aspect de la présente invention est de permettre l'exploitation d'un chemin d'exploration dans un dispositif de type "SMARTCARD", en utilisant les broches existantes.

Selon l'invention, on génère à partir des broches existantes un signal interne de mise en mode d'exploration SM. Pour cela, on prévoit un bit de test TB qui est accessible de manière classique, au moins en écriture, par l'intermédiaire de la broche d'entrée/sortie I/O et le protocole d'échange d'informations. Bien entendu, pour pouvoir modifier le bit de test TB, le dispositif doit d'abord être mis dans un mode le permettant, c'est-à-dire dans le mode de test. Il faut noter que, classiquement, au repos, la broche I/O se trouve dans le mode entrée et est donc contrôlable de l'extérieur. Un circuit interne d'assistance de test 18 active le signal de mode d'exploration SM lorsque le bit de test TB est validé (par exemple à l'état 1) et que la broche d'entrée/sortie I/O se trouve à un état (par exemple 1) différent de son état de repos.

Ainsi, pour activer le signal de mode d'exploration interne SM, l'utilisateur, de l'extérieur, commence par valider le bit de test TB de manière classique par l'intermédiaire de la broche d'entrée/sortie I/O, arrête l'horloge CLK du microcontrôleur, ce qui rend disponible la broche I/O, puis force la broche I/O à 1.

Tandis que le bit de test TB est validé, le microcontrôleur 12 conserve son fonctionnement normal, ce qui permettra ultérieurement de dévalider le bit de test TB par l'intermédiaire encore de la broche I/O. Par conséquent, une succession de modifications de l'état de la broche I/O, ne serait-ce que pour dévalider le bit de test TB, risque d'être interprétée à tort par le microcontrôleur 12 comme des commandes. C'est pour éviter ceci que l'horloge CLK du microcontrôleur est gelée lorsque la broche I/O est forcée à 1 pour activer le signal de mode d'exploration SM. Lors de la reprise d'activité du microcontrôleur pendant les tests, c'est l'horloge de périphérique DCLK qui est gelée afin d'éviter toute mauvaise interprétation de l'état de la broche I/O.

L'entrée du chemin d'exploration constitué par les registres 16 lorsque le signal SM est actif est reliée à la broche d'entrée de périphérique Din.

La sortie de ce chemin d'exploration est couplée à la sortie de périphérique Dout par l'intermédiaire d'un multiplexeur 20 qui sélectionne la sortie normale du périphérique 14 lorsque le signal SM est inactif, et qui sélectionne la sortie du chemin d'exploration lorsque le signal SM est actif.

Les registres 16 sont classiquement validés individuellement par un décodage des adresses A et d'un signal d'écriture en synchronisme sur l'horloge CLK du microcontrôleur. Dans le mode d'exploration, l'horloge CLK est gelée et les registres doivent tous être cadencés par une horloge de test commune. Cette horloge de test est fournie par l'intermédiaire de la broche d'horloge DCLK du périphérique. Comme cela est représenté, les registres 16 reçoivent un signal d'horloge CK1 généré par le circuit d'assistance 18. Le signal CK1 est gelé hors mode d'exploration et égal au signal DCLK dans le mode d'exploration.

De préférence, le périphérique 14 est gelé pendant une phase d'exploration. Pour cela, le circuit d'assistance 18 lui fournit un signal d'horloge CK2 qui est égal au signal DCLK hors mode d'exploration et gelé pendant le mode d'exploration.

Bien entendu, lorsqu'on dévalide le bit de test TB, l'état de la broche I/O variera, ce qui provoquera des activations intempestives du signal de mode d'exploration SM. Pour éviter un décalage intempestif du contenu des registres 16 qui pourrait en résulter, on gèle l'horloge de périphérique DCLK, comme cela a été mentionné plus haut.

Avec les états logiques cités à titre d'exemple ci-dessus, le circuit d'assistance 18 réalise les fonctions logiques suivantes :

$$SM = I/O \cdot TB$$

$$CK1 = (DCLK \cdot SM)$$

$$CK2 = (DCLK \cdot SM^*)$$

où le symbole * désigne le complément logique du signal qui le précède.

Selon un mode de réalisation illustré à la figure 2, l'entrée de remise à zéro R du périphérique 14 n'est pas directement reliée à la broche de remise à zéro générale RST. Au contraire, elle y est reliée, comme cela est représenté en pointillés, par l'intermédiaire d'une bascule supplémentaire insérée dans le chemin d'exploration. Ceci sera décrit plus en détail ultérieurement.

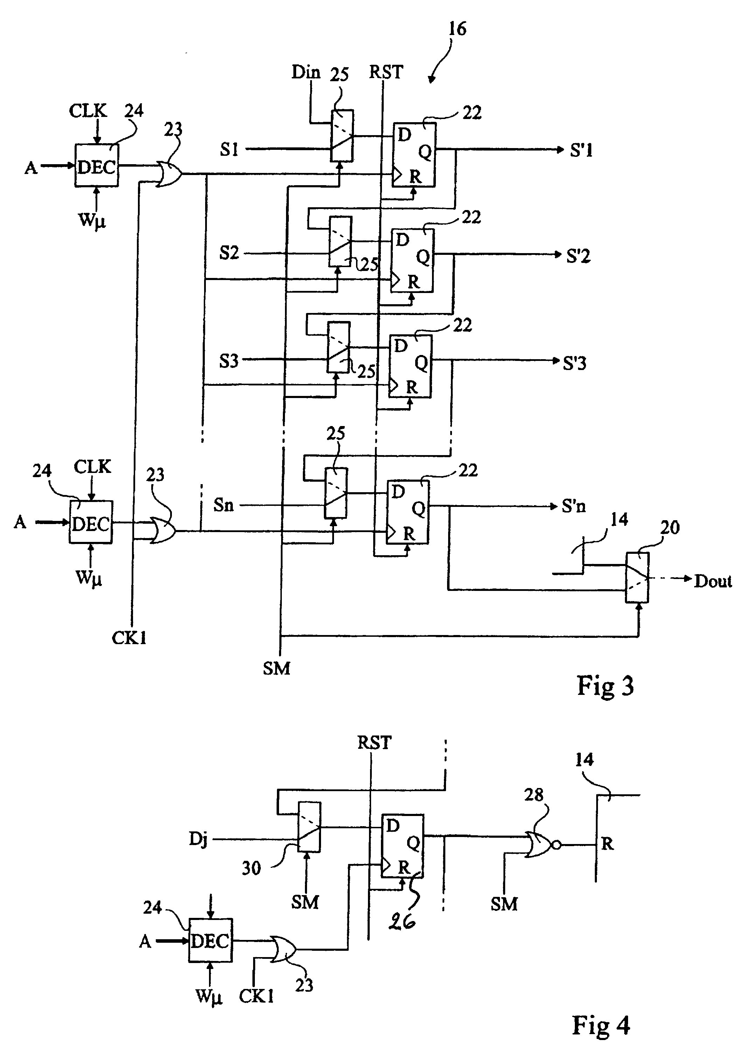

La figure 3 représente à titre d'exemple une structure permettant de connecter les bascules des registres d'interface 16 selon une configuration normale et selon une configuration de registre à décalage pour former un chemin d'exploration.

Les registres d'interface comprennent des bascules 22 pour stocker normalement les états de signaux S respectifs et retransmettre ces états sur des signaux S' respectifs. Chaque registre comprend une ou plusieurs bascules 22 dont les entrées d'horloge sont reliées à une ligne de sélection spécifique. A titre d'exemple, les premières bascules ont été représentées comme appartenant à un même registre. Chaque ligne de sélection spécifique est reliée à la sortie d'une porte OU 23 qui reçoit l'horloge d'exploration CK1. En outre, chaque porte OU 23 reçoit le signal de sélection que recevaient classiquement les entrées d'horloge des bascules, c'est-à-dire la sortie d'un décodeur d'adresses 24. Chaque décodeur d'adresses 24 active classiquement sa sortie lorsque l'adresse sur le bus d'adresses A lui correspond, et que le signal d'horloge CLK et un signal d'écriture Wμ du bus de commande sont actifs.

Les bascules 22 reçoivent toutes le signal de remise à zéro générale RST.

Devant l'entrée D de chaque bascule 22 est connecté un multiplexeur 25 qui sélectionne le signal S correspondant en mode normal (SM = 0) ou bien le signal de sortie S' de la bascule précédente en mode d'exploration (SM = 1). En mode d'exploration, le premier multiplexeur 25 sélectionne l'entrée Din du périphérique tandis que le multiplexeur 20 sélectionne la sortie S' de la dernière bascule 22 pour la fournir à la broche de sortie Dout. Ainsi, en mode d'exploration, toutes les bascules 22 sont connectées selon un registre à décalage entre l'entrée Din et la sortie Dout.

Le chemin d'exploration 16 de la figure 2 permettra, de manière classique, de vérifier ce que le microcontrôleur 12 écrit dans les registres 16 en faisant fonctionner le microcontrôleur en mode normal puis en lisant, en mode d'exploration, le contenu des registres 16 par l'intermédiaire de la broche Dout. Il permet également, en mode d'exploration, de précharger les registres 16 avec des valeurs souhaitées par l'intermédiaire de la broche Din puis, en mode normal, de vérifier le comportement du périphérique 14 par l'intermédiaire des broches Din et Dout et en récupérant le contenu des registres d'état (INT) par la broche Dout en mode d'exploration.

Toutefois, on ne peut vérifier de manière suffisante les effets d'une remise à zéro générale. Si l'on voulait tester la remise à zéro du périphérique 14 par l'intermédiaire du microcontrôleur 12, ce dernier serait programmé pour écrire des uns dans tous les points mémoire qui lui sont accessibles dans le périphérique 14 pour ensuite les lire après une remise à zéro. Toutefois, la remise à zéro générale provoque également la remise à zéro du microcontrôleur, d'où il résulte que le microcontrôleur ne peut jamais atteindre la partie finale du programme, destinée à relire les points mémoire remis à zéro. Il serait par ailleurs difficilement envisageable d'effectuer une remise à zéro, qui doit survenir de l'extérieur, au bon moment au cours de l'exécution du programme de test.

La figure 4 représente une option avantageuse permettant de remettre à zéro le périphérique de l'extérieur ou par le microcontrôleur, sans remettre à zéro le microcontrôleur ni les registres 16. On suppose ci-après que la remise à zéro du périphérique est obtenue en présentant l'état 1 sur son entrée R.

Une bascule 26 est ajoutée au chemin d'exploration constitué par les bascules 22. L'entrée D de oette bascule 26 est reliée à la sortie S' d'une bascule précédente tandis que la sortie Q de cette bascule est couplée à l'entrée de la bascule suivante (par un multiplexeur 25, le cas échéant).

La sortie Q de la bascule 26 est en outre reliée à l'entrée de remise à zéro R du périphérique 14, laquelle entrée, comme cela est représenté à la figure 2, n'est pas reliée à la broche de remise à zéro générale RST. Plus précisément, le signal de remise à zéro du périphérique 14 est fournie par une porte NON OU 28 qui reçoit sur une première entrée la sortie Q de la bascule 26 et sur une deuxième entrée le signal de mode d'exploration SM. Ainsi, un état zéro de la bascule 26 ne provoque une remise à zéro du périphérique 14 que lorsque le signal de mode d'exploration SM est à zéro (inactif). Ceci évite une remise à zéro intempestive du périphérique 14 lorsque des données circulent dans le chemin d'exploration, y compris dans la bascule 26, pendant une phase d'exploration.

L'entrée D de la bascule 26 est, comme les autres bascules 22, reliée à la sortie d'un multiplexeur 30. Lorsque le signal SM de mode d'exploration est actif, le multiplexeur 30 sélectionne la sortie S' de la bascule précédente. Lorsque le signal SM est inactif, le multiplexeur 30 sélectionne une ligne Dj du bus de données D, par laquelle le microcontrôleur pourra modifier l'état de la bascule 26.

L'entrée d'horloge de la bascule 26 reçoit, comme les bascules 22, la sortie d'une porte OU 23, recevant elle-même l'horloge CK1 et la sortie d'un décodeur d'adresses 24, ce qui rend la bascule 26 accessible en écriture par le microcontrôleur. Par ailleurs, la bascule 26 reçoit également le signal de remise à zéro générale RST.

Lors d'une remise à zéro générale par une activation du signal RST, la bascule 26 est remise à zéro, ce qui provoque la remise à zéro du périphérique 14 avec tous les autres éléments du dispositif.

A la mise sous tension, après une remise à zéro générale, le microcontrôleur écrit un 1 dans la bascule 26 pour libérer le périphérique de son état de remise à zéro. Ensuite, à n'importe quel instant, le microcontrôleur peut provoquer une remise à zéro du périphérique, sans remettre à zéro d'autres éléments, en écrivant un 0 dans la bascule 26.

Un programme de test de remise à zéro est particulièrement simple et prend peu de place en mémoire, de sorte qu'il est acceptable de l'intégrer dans le microcontrôleur. Ce programme de test consiste à écrire des 1 dans les points mémoire, à provoquer une remise à zéro, à relire les points mémoire afin de les contrôler, et à stocker les résultats afin qu'on puisse les récupérer de l'extérieur par la broche d'entrée/sortie I/O.

Bien entendu, l'état de la bascule 26 peut également être établi de l'extérieur à l'aide de données rentrées dans le chemin d'exploration dans le mode d'exploration. Dans le mode d'exploration (SM = 1) la porte 28 empêche des remises à zéro intempestives du périphérique 14 par des bits qui transitent par la bascule 26. Des portes OU supplémentaires pourront être connectées, comme la porte 28, aux sorties des bascules 22, si les bits qui circulent en série dans les bascules pendant le mode d'exploration risquent de provoquer des réactions intempestives du périphérique.

Dans le dispositif tel que décrit jusqu'à maintenant, les registres 16 formant le chemin d'exploration sont essentiellement des registres utilisés en écriture par le microcontrôleur (sauf pour les registres d'état qui sont positionnés par le périphérique). Or le périphérique comporte des éléments qui sont accessibles en lecture par le microcontrôleur, par exemple des mémoires de type premier-entré/premier-sorti (FIFO), qui présentent leurs données sur le bus, sans passer par des registres d'interface. Le contenu de ces mémoires ne peut donc être vérifié par l'intermédiaire du chemin d'exploration.

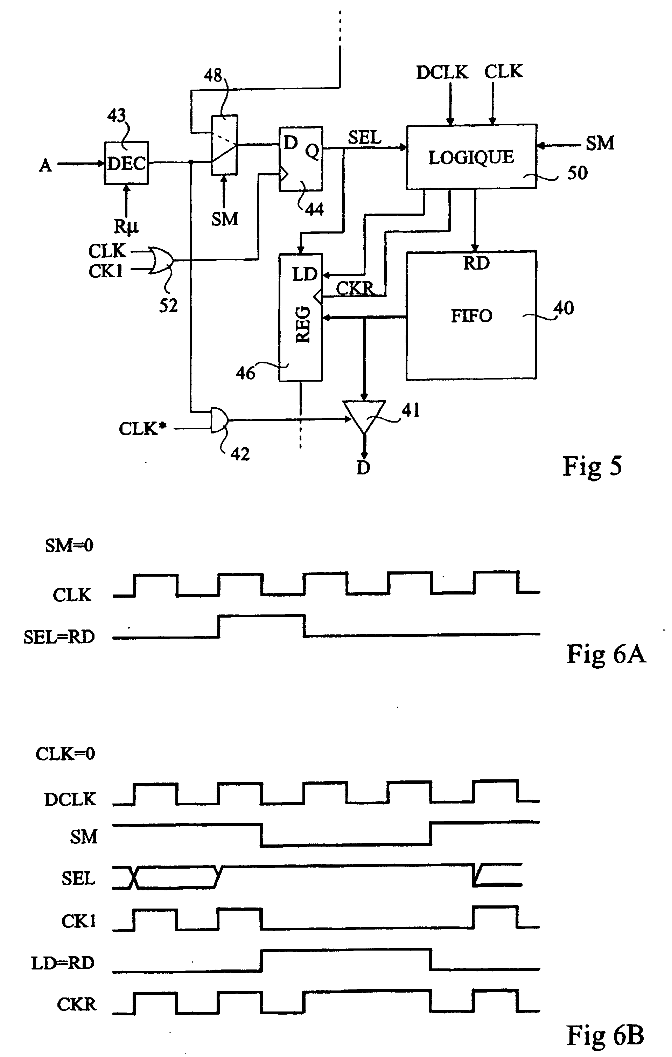

La figure 5 illustre une solution selon l'invention permettant de récupérer le contenu d'une mémoire FIFO 40 du périphérique par l'intermédiaire du chemin d'exploration.

La sortie de la mémoire FIFO 40 est reliée aux lignes de données D par l'intermédiaire de portes trois états 41 qui se trouvent à haute impédance en absence de cycle de lecture par le microcontrôleur. Les portes 41 sont commandées par une porte ET 42 qui reçoit le complément CLK* du signal d'horloge CLK et la sortie d'un décodeur d'adresses 43. La sortie du décodeur 43 est activée lorsqu'une adresse qui lui correspond est présentée sur le bus d'adresses A et qu'un signal de lecture Rμ est activé par le microcontrôleur. Classiquement, le signal de lecture RD correspondait à la sortie du décodeur d'adresses 43, synchronisée sur l'horloge CLK.

Dans le mode de réalisation de la figure 5, on prévoit une bascule de sélection 44 et un registre de capture 46 disposés dans le chemin d'exploration. Le registre de sélection 44 est destiné à contenir un bit qui détermine si l'on effectue ou non des accès en lecture à la mémoire 40, et le registre 46 est destiné à recevoir la sortie de la mémoire 40.

L'entrée D de la bascule 44 est reliée à la sortie d'un multiplexeur 48. Lorsque le signal de mode d'exploration SM est inactif, le multiplexeur 48 sélectionne la sortie du décodeur d'adresses 43. Dans le cas contraire, le multiplexeur 48 sélectionne la sortie S' de la bascule précédente du chemin d'exploration. La sortie SEL de la bascule 44 est reliée à une entrée série du registre 46 qui est du type à décalage et à précharge. La sortie série du registre 46 est reliée au multiplexeur précédant la bascule suivante du chemin d'exploration.

La sortie SEL de la bascule 44 est en outre fournie à un circuit logique 50 qui établit le signal de lecture RD de la mémoire 40, le signal d'horloge CKR du registre à décalage 46, et un signal de précharge LD du registre 46, en fonction du signal SEL, du signal de mode d'exploration SM, et des signaux d'horloge DCLK et CLK. Alors que le registre 46 est cadencé par un signal d'horloge spécifique CKR en mode d'exploration, la bascule 44 est cadencée par un OU logique 52 entre l'horloge CK1 et l'horloge CKL.

La figure 6A représente un chronogramme illustrant une lecture normale de la mémoire FIFO 40, c'est-à-dire lorsque le signal de mode d'exploration est inactif (SM = 0), que le bit de test n'est pas validé, et que l'horloge CLK du microcontrôleur 12 n'est pas gelée.

Au moment où le microcontrôleur veut accéder en lecture à la mémoire FIFO 40, il présente sur le bus l'adresse reconnue par le décodeur 43. Dès le front montant suivant de l'horloge CLK, l'état actif présent en sortie du décodeur 43 passe dans la bascule 44, d'où il résulte que le signal SEL est activé. Le circuit logique 50 fournit le signal SEL en tant que signal de lecture RD. La bascule 44 assure la synchronisation des cycles de lecture sur le signal CLK.

Il importe peu, en mode normal, que les données lues soient écrites dans le registre 46, ou que le signal CKR varie.

La figure 6B représente un chronogramme illustrant une procédure destinée à récupérer la sortie de la mémoire FIFO 40 par l'intermédiaire du chemin d'exploration lorsque le bit de test TB est validé.

L'horloge CLK du microcontrôleur est gelée tandis que l'horloge DCLK de périphérique fonctionne continûment.

Initialement, le signal de mode d'exploration SM est actif, ce qui provoque la circulation de données dans le chemin d'exploration de l'entrée Din vers la sortie Dout au rythme de l'horloge CK1, alors égale à l'horloge DCLK. Le périphérique 14 est inactif puisque son horloge CK2 est gelée lorsque le signal SM est actif.

Le signal SEL varie aléatoirement, en fonction des bits qui circulent dans le chemin d'exploration. Ces états aléatoires du signal SEL sont ignorés tant que le signal de mode d'exploration SM est actif.

Le registre de capture 46, étant dans le chemin d'exploration, son horloge CKR est activée au rythme de l'horloge CK1 afin d'assurer le décalage des données.

Dès que tous les bits souhaités ont été introduits dans le chemin d'exploration, le signal SM devient inactif au front descendant suivant de l'horloge DCLK. Si l'on veut récupérer la sortie de la mémoire FIFO 40, la bascule 44 se trouve à 1, c'est-à-dire que le signal SEL est actif.

La désactivation du signal SM provoque l'arrêt des horloges CK1 et CKR.

Le signal de lecture RD et le signal de précharge LD sont égaux au complément du signal SM si le signal SEL est actif. Dans le cas contraire, les signaux RD et LD restent inactifs.

A l'activation du signal RD, la mémoire 40 est incrémentée et présente une nouvelle donnée à sa sortie et donc sur les bascules du registre 46 mis en mode précharge par le signal LD. Au front montant suivant de l'horloge DCLK, le signal CKR est réactivé pour que la sortie de la mémoire 40 soit chargée dans le registre 46.

Le signal SM est réactivé afin de récupérer le contenu du registre 46 par le chemin d'exploration. Les signaux LD et RD sont désactivés et les signaux CK1 et CKR sont de nouveau égaux à l'horloge DCLK.

Le système à registre de capture 46 décrit ci-dessus peut être utilisé pour récupérer par le chemin d'exploration les états de lignes quelconques non normalement accessibles par le microcontrôleur.

Les fonctions logiques du circuit 50 sont facilement déductibles par l'homme du métier à partir des chronogrammes des figures 6A et 6B et des explications fournies ci-dessus.

## Revendications

1. Dispositif électronique comprenant :

   - un microcontrôleur (12) pouvant être mis dans un mode spécifique dans lequel des registres internes sont modifiables de l'extérieur
   - un périphérique (14) couplé de manière interne au microcontrôleur par l'intermédiaire de registres d'interface (16) ;
   - une seule broche d'entrée/sortie (I/O) pour communiquer avec le microcontrôleur de l'extérieur ;
   - une broche (Din) d'entrée de périphérique et une broche (Dout) de sortie de périphérique ;
   - une broche (CLK) d'horloge de microcontrôleur et une broche (DCLK) d'horloge de périphérique ;

   **caractérisé en ce que** les registres d'interface (16) sont susceptibles d'être connectés selon une configuration de registre à décalage formant un chemin d'exploration de test accessible en série et cadencé par un signal d'horloge à appliquer sur la broche d'horloge de périphérique, et **en ce qu'**il comprend un circuit d'assistance de test (18) qui, dans un mode d'exploration, connecte les registres d'interface selon la configuration de registre à décalage, le mode d'exploration étant sélectionné lorsqu'un bit de test (TB), accessible par la broche d'entrée/sortie (I/O), est validé et que la broche d'entrée/sortie est forcée de l'extérieur à un état distinct de son état par défaut.

**2.** Dispositif selon la revendication 1, comprenant en outre une broche de remise à zéro générale (RST) reliée directement à une entrée de remise à zéro du microcontrôleur (12), **caractérisé en ce que** cette broche de remise à zéro générale est reliée à une entrée de remise à zéro du périphérique (14) par l'intermédiaire d'une bascule (26) connectée dans le chemin d'exploration.

**3.** Dispositif selon la revendication 2, **caractérisé en ce que** le contenu de ladite bascule (26) est modifiable par le microcontrôleur.

**4.** Dispositif selon la revendication 1, dans lequel le périphérique (14) comprend une mémoire (40) à laquelle le microcontrôleur (12) accède en lecture par un bus interne (D, A, C), **caractérisé en ce qu'il** comprend une bascule (44) connectée dans le chemin d'exploration et dont un état actif provoque une lecture de ladite mémoire, un registre de capture (46), également connecté dans le chemin d'exploration, étant prévu pour stocker le mot présenté en sortie de la mémoire.

**5.** Dispositif selon la revendication 2, **caractérisé en ce qu'il** comprend des moyens (28) pour empêcher l'activation de la remise à zéro du périphérique (14) par un état de ladite bascule (26) lorsque le mode d'exploration est sélectionné.

**6.** Procédé de test d'un dispositif selon l'une quelconque des revendications 1 à 5, **caractérisé en ce qu'il** comprend les étapes suivantes :

- valider le bit de test par l'intermédiaire de la broche d'entrée/sortie (I/O) ;
- arrêter l'horloge (CLK) du microcontrôleur (12) ;
- forcer la broche d'entrée/sortie à l'état opposé de son état par défaut ; et
- introduire ou extraire des données en série à la cadence de l'horloge de périphérique (DCLK) dans le chemin d'exploration par la broche d'entrée (Din) ou par la broche de sortie (Dout) du périphérique.

**Patentansprüche**

**1.** Elektronische Vorrichtung, welche umfaßt

- eine Mikrosteuervorrichtung (12), welche in einen spezifischen Mode versetzt werden kann, in welchem innere Register von außen modifizierbar sind;
- eine periphere Einheit (14), welche über Interfaceregister (16) intern mit der Mikrosteuerung gekoppelt ist;

- eine einzige Eingangs-/Ausgangs-Leitung (I/O) zur Kommunikation mit der Mikrosteuervorrichtung von außen;
- eine Eingangsleitung (Din) der peripheren Einheit und eine Ausgangsleitung (Dout) der peripheren Einheit;
- eine Taktleitung (CLK) der Mikrosteuerung und eine Taktleitung (DCLK) der peripheren Einheit;

**dadurch gekennzeichnet, daß** die Interfaceregister (16) in eine Schieberegister-Konfiguration geschaltet werden können, welche einen Abfrage- bzw. Scanweg bildet, der seriell zugänglich ist und durch ein an die Taktleitung der peripheren Einheit angelegtes Taktsignal getaktet werden kann, und daß die Vorrichtung eine Test-bzw. Prüf-Hilfsschaltung (18) umfaßt, die in einem Abfrage- bzw. Scan-Mode die Interface-Register in die Schieberegister-Konfiguration schaltet, wobei der Abfrage-bzw. Scan-Mode ausgewählt wird, wenn ein durch die Eingangs-/Ausgangsleitung (I/O) zugängliches Testbit (TB) aktiviert und die Eingangs-/Ausgangsleitung von außen zwangsweise in einen von ihrem Defekt-bzw.Default-Zustand verschiedenen Zustand versetzt wird.

**2.** Vorrichtung nach Anspruch 1, welche des weiteren eine allgemeine Nullrücksetz-Leitung (RST) aufweist, die direkt mit einem Null-Rücksetzeingang der Mikrosteuervorrichtung (12) verbunden ist, **dadurch gekennzeichnet, daß** diese allgemeine Null-Rücksetzleitung über eine in dem Abfrage-bzw.Scan-Weg liegende Kipp-bzw. Flipflop-Schaltung (26) mit einem Null-Rücksetzeingang der peripheren Einheit verbunden ist.

**3.** Vorrichtung nach Anspruch 2, **dadurch gekennzeichnet, daß** der Inhalt der genannten Kipp-bzw. Flipflop-Schaltung (26) durch die Mikrosteuereinrichtung modifizierbar ist.

**4.** Vorrichtung nach Anspruch 1, in welcher die periphere Einheit (14) einen Speicher (40) umfaßt, auf den die Mikrosteuerung (12) über einen internen Bus (D,A,C) im Lesemode zugreift, **dadurch gekennzeichnet, daß** sie eine im Abfrage-bzw. Scanweg liegende Kipp-bzw.Flipflop-Schaltung (44) umfaßt, die in einem aktiven Zustand ein Lesen aus dem genannten Speicher veranlaßt, wobei ein gleichfalls in dem Abfrage-bzw. Scan-Weg liegendes Ein-bzw.Auffang-Register (46) vorgesehen ist, um das im Ausgang des Speichers anliegende Wort zu speichern.

**5.** Vorrichtung nach Anspruch 2, **dadurch gekennzeichnet, daß** sie Mittel (28) aufweist, um die Aktivierung der Null-Rüchsetzung der peripheren Einheit (14) durch einen Zustand der genannten Kipp-bzw. Flipflop-Schaltung (26) zu verhindern, wenn der Abfrage- bzw.Scan-Mode gewählt ist.

6. Test-bzw.Prüfverfahren für eine Vorrichtung nach einem der Ansprüche 1 bis 5, **dadurch gekennzeichnet, daß** es die folgenden Stufen bzw. Schritte umfaßt:

- Aktivieren des Testbits über die Eingangs-/Ausgangs-Leitung (I/O);
- Sperren des Takts (CLK) der Mikrosteuereinrichtung (12);
- zwangsweise Versetzung der Eingangs-/Ausgangsleitung (I/O) in einen ihrem Defekt-bzw. Dafault-Zustand entgegengesetzten Zustand;
- serielle Eingabe bzw. Entnahme von Daten, im Takt des Takts der peripheren Einheit, in den bzw. aus dem Abfrage-bzw. Scan-Weg über die Eingangsleitung (Din) oder die Ausgangsleitung (Dout) der peripheren Einheit.

**Claims**

1. An electronic device including:

- a microcontroller (12) which can be set in a specific mode in which internal registers can be modified from outside;
- a peripheral (14) internally coupled to the microcontroller via interface registers (16);
- a single input/output lead (I/O) for communicating with the microcontroller from the outside;
- a peripheral input lead (Din) and a peripheral output lead (Dout);
- a microcontroller clock lead (CLK) and a peripheral clock lead (DCLK);

**characterized in that** the interface registers (16) can be connected according to a shift register configuration forming a test scan path accessible in series and clocked by a clock signal to be applied to the peripheral clock lead, and including a test aid circuit (18) which, in a scan mode, connects the interface registers according to the shift register configuration, the scan mode being selected when a test bit (TB), accessible through the input/output lead (I/O), is enabled, and when the input/output lead is forced from the outside to a state distinct from its default state.

2. A device according to claim 1, further including a general reset lead (RST) directly connected to a reset input of the microcontroller (12), **characterized in that** this general reset lead is connected to a reset input of the peripheral (14) via a flip-flop (26) connected in the scan path.

3. A device according to claim 2, **characterized in that** the content of the flip-flop (26) can be modified by the microcontroller.

4. A device according to claim 1, wherein the peripheral (14) includes a memory (40) which the microcontroller (12) accesses in the read mode through an internals bus (D, A, C), **characterized in that** it includes a flip-flop (44) connected in the scan path and an active state of which causes a reading from said memory, a capture register (46), also connected in the scan path, being provided for storing the word presented at the memory output.

5. A device according to claim 2, **characterized in that** it includes means (28) for preventing the activation of the reset of the peripheral (14) by a state of the flip-flop (26) when the scan mode is selected.

6. A method of testing the device of any of claims 1 to 5, **characterized in that** it includes the steps of:

- enabling the test bit via the input/output lead (I/O);
- stopping the clock (CLK) of the microcontroller (12);
- forcing the input/output lead to the state opposite to its default state; and
- inputting or extracting data in series at the rate of the peripheral clock (DCLK) in the scan path through the input lead (Din) or through the output lead (Dout) of the peripheral.

EP 0 875 830 B1

Fig 1

Fig 2

9

Fig 3

Fig 4

Fig 5

Fig 6A

Fig 6B